(19) Europäisches Patentamt
European Patent Office
Office européen des brevets

(11) **EP 4 004 496 B1**

(12) **EUROPÄISCHE PATENTSCHRIFT**

(45) Veröffentlichungstag und Bekanntmachung des Hinweises auf die Patenterteilung:
**10.04.2024   Patentblatt 2024/15**

(21) Anmeldenummer: **20733797.3**

(22) Anmeldetag: **18.06.2020**

(51) Internationale Patentklassifikation (IPC):
**G01F 1/58** *(2006.01)*       **G01N 11/00** *(2006.01)*

(52) Gemeinsame Patentklassifikation (CPC):
**G01F 1/588;** G01N 2011/0026

(86) Internationale Anmeldenummer:
**PCT/EP2020/066993**

(87) Internationale Veröffentlichungsnummer:
**WO 2021/018470 (04.02.2021 Gazette 2021/05)**

(54) **DAS MAGNETISCH-INDUKTIVE DURCHFLUSSMESSGERÄT UND VERFAHREN ZUM BETREIBEN EINES MAGNETISCH-INDUKTIVEN DURCHFLUSSMESSGERÄTES**

MAGNETICALLY INDUCTIVE FLOW METER AND METHOD FOR OPERATING A MAGNETICALLY INDUCTIVE FLOW METER

DÉBITMÈTRE À INDUCTION MAGNÉTIQUE ET PROCÉDÉ DE FONCTIONNEMENT D'UN DÉBITMÈTRE À INDUCTION MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2019   DE 102019120315**

(43) Veröffentlichungstag der Anmeldung:
**01.06.2022   Patentblatt 2022/22**

(73) Patentinhaber: **Endress + Hauser Flowtec AG**
**4153 Reinach (CH)**

(72) Erfinder: **MARIAGER, Simon**
**4059 Basel (CH)**

(74) Vertreter: **Hahn, Christian**
**Endress+Hauser Group Services**
**(Deutschland)AG +Co. KG**
**Colmarer Straße 6**
**79576 Weil am Rhein (DE)**

(56) Entgegenhaltungen:
WO-A1-2015/050460      JP-A- S6 175 217
US-A- 6 094 992      US-A1- 2008 127 712

- **TRAECHTLER A ET AL: "TOMOGRAPHISCHE METHODEN BEI DER INDUKTIVEN DURCHFLUSSMESSUNG ZUR BESTIMMUNG VON STROEMUNGSPROFILEN UND -PARAMETERN", TM - TECHNISCHES MESSEN/PLATTFORM FÜR METHODEN, SYSTEME UND ANWENDUNGEN DER MESSTECHNIK, R.OLDENBOURG VERLAG. MUNCHEN, DE, Bd. 64, Nr. 10, Oktober 1997 (1997-10), Seiten 365-373, XP000750766, ISSN: 0171-8096**
- **ANSGAR TRÄCHTLER ET AL: "In-Line Monitoring of Rheological Parameters with an Electromagnetic Flowmeter", PARTICLE AND PARTICLE SYSTEMS CHARACTERIZATION., Bd. 15, Nr. 1, 14. Dezember 1998 (1998-12-14), Seiten 30-35, XP055729760, DE ISSN: 0934-0866, DOI: 10.1002/(SICI)1521-4117(199802)15:1<30::AID-PPSC30>3.0.CO;2-X**

**Beschreibung**

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne oder mehrere Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung $U$ die Durchflussgeschwindigkeit u und, mit Hinzunahme eines bekannten Rohrquerschnitts, der Volumendurchfluss $\dot{V}$ ermittelt werden. Für die Messspannung $U$ gilt die vereinfachte Gleichung

$$U = f(Re) \cdot u \cdot S,$$

wobei $S$ eine von der Sensorgeometrie und Magnetfeld abhängige, nominelle Signalstärke und $f(Re)$ ein Strömungsprofil- bzw. Reynolds-Zahl-abhängiger Korrekturfaktor ist. Üblicherweise nimmt man den Korrekturfaktor $f(Re)$ als konstant an. Dies ist aber nicht immer gegeben. Die nominelle Signalstärke $S$ wird üblicherweise bei der Justierung des Messgerätes bestimmt und ist im Messgerät hinterlegt.

Die Reynolds-Zahl eines fließenden Mediums in einem Messrohr ist definiert durch

$$Re = \rho \cdot u \cdot \frac{DN}{\mu} = u \cdot \frac{DN}{v},$$

mit dem Durchmesser des Messrohres $DN$, der Dichte des Mediums $\rho$, der dynamischen Viskosität $\mu$ und der kinematischen Viskosität v des Mediums.

Magnetisch-induktive Durchflussmessgeräte sind empfindlich gegenüber der vorliegenden Reynolds-Zahl des Mediums im Messrohr, da diese das Strömungsprofil des fließenden Mediums bestimmt. Abhängig vom Rohrsystem, Messgerät und Einbauszenario kann der Korrekturfaktor $f(Re)$ variieren und um mehrere Prozent vom angenommenen, konstanten Wert abweichen. Üblicherweise wird die Anordnung der Messelektroden und der magnetfelderzeugenden Vorrichtung dahingehend optimiert, dass das Durchflussmessgerät möglichst linear ist, d.h. die induzierte Messspannung über eine möglichst großen Reynolds-Zahlenbereich bzw. für den für die spezifische Anwendung interessanten Reynolds-Zahlenbereich Reynolds-Zahl-unabhängig ist. Somit sind Durchflussmessgeräte, welche in Übergangsströmungsbereichen eine Abweichung von einzelnen Prozenten aufweisen, und Durchflussmessgeräte, welche Abweichungen von ca. 0,2% für Strömungen mit einem turbulenten Strömungsprofil aufweisen bereits Industriestandart.

In herkömmlichen magnetisch-induktiven Durchflussmessgeräten kann aus der im Medium induzierten und mit den Messelektroden abgegriffenen Messspannung nicht die Durchflussgeschwindigkeit und gleichzeitig der Reynolds-Zahl abhängige Korrekturfaktor $f(Re)$ bestimmt werden. Deshalb wird $f(Re)$ als konstant angenommen. Es ist deshalb zwingend notwendig, das Elektrodensystem, das Magnetsystem und die Rohrgeometrie des magnetisch-induktiven Durchflussmessgerätes so anzupassen, dass $f(Re)$ über einen möglichst großen Reynolds-Zahlenbereich konstant ist. Diese Anpassung geht stehts mit Einschränkungen einher, wie dem Verlust der Signalstärke oder der Abhängigkeit von der Polschuhgeometrie.

Die EP 0 770 855 A1 oder A. Trächtler und al. "TOMOGRAPHISCHE METHODEN BEI DER INDUKTIVEN DURCHFLUSSMESSUNG ZUR BESTIMMUNG VON STROEMUNGSPROFILEN UND -PARAMETERN.", Technisches Messen/Plattform für Methoden, Systeme und Anwendungen der Messtechnik, 1997-10-01, R. OLDENBOURG VERLAG. MUNCHEN. ISSN 0171-8096, lehrt ein magnetisch-induktives Durchflussmessgerät zur Messung von nicht-newtonschen Flüssigkeiten, das eine Auswerte-Elektronik aufweist, die dazu eingerichtet ist, den Fließindex und die scheinbare Viskosität eines fließenden Mediums zu bestimmen. Zwei Messelektroden sind so im Messrohr angeordnet, dass zwei die jeweiligen Messelektroden schneidenden Radien einen Winkel von 90° bzw. 120° aufspannen. Ein Umschalter ist dazu eingerichtet, zwei Spulen entweder gleichsinnig oder gegensinnig in Serie zu schalten. Die zwischen den beiden Messelektroden anliegende Potentialdifferenz wird für die beiden Spuleneinstellungen nacheinander ermittelt und zur Bestimmung des Fließindexes und der scheinbaren Viskosität des Mediums verwendet.

Somit ist es grundsätzlich aus dem Stand der Technik bekannt, die Bestimmung zusätzlicher Strömungseigenschaften durch Modifizieren der magnetfelderzeugenden Vorrichtung und der Messelektrodenanordnung zu ermöglichen. Nachteilig am bekannten Stand der Technik jedoch ist, dass für die Bestimmung des Fließindexes immer mindestens zwei Messphasen mit unterschiedlichen Spuleneinstellungen benötigt werden, in denen sich das Magnetfeld jeweils wieder neu stabilisieren muss, bevor gemessen werden kann.

Der Erfindung liegt daher die Aufgabe zugrunde ein magnetisch-induktives Durchflussmessgerät und ein Verfahren zum Betreiben des magnetisch-induktiven Durchflussmessgerätes anzugeben, das mit einer Spuleneinstellung auskommt.

Die Aufgabe wird gelöst durch das magnetisch-induktive Durchflussmessgerät nach Anspruch 1 und durch das Verfahren zum Betreiben des magnetisch-induktiven Durchflussmessgerätes nach Anspruch 7.

Das erfindungsgemäße magnetisch-induktive Durchflussmessgerät umfasst ein Messrohr zum Führen eines fließfähigen Mediums, wobei das Messrohr eine Wandung aufweist, mindestens drei Messelektroden, die in der Wandung angeordnet sind und einen galvanischen Kontakt mit dem fließenden Medium bilden, mindestens eine magnetfelderzeugende Vorrichtung zum Erzeugen eines das Messrohr durchsetzenden Magnetfeldes, und eine Messschaltung, die dazu eingerichtet ist mindestens eine erste Messgröße zu ermitteln, wobei Messwerte der ersten Messgröße an einem ersten Messelektrodenpaar ermittelt werden, eine Auswerteschaltung, die dazu eingerichtet ist eine Reynolds-Zahl und/oder einen kinematischen Viskositätswert des Mediums im Messrohr mittels Messwerten der ersten und einer zweiten Messgröße zu ermitteln, wobei Messwerte der zweiten Messgröße an einem zweiten Messelektrodenpaar oder an einer dritten Messelektrode in Bezug auf ein Referenzpotential ermittelt werden.

Weiterhin sind die Messelektroden erfindungsgemäß so im Messrohr angeordnet, dass bei einer Testmessung Quotienten aktueller Messwerte der ersten und zweiten Messgröße zumindest in einem Reynolds-Zahlenbereich von $10\,000 \leq Re \leq 100\,000$, mit der Reynolds-Zahl des fließenden Mediums im Messrohr bijektiv korrespondieren Es ist besonders vorteilhaft, wenn das Durchflussmessgerät mindestens drei Messelektroden aufweist. Dadurch lässt sich das Messgerät so konfigurieren, dass die an einem ersten Messelektrodenpaar abgegriffene Messgröße Reynolds-Zahl unabhängig ist und die am zweiten Messelektrodenpaar abgegriffene oder an der dritten Messelektrode in Bezug auf das Referenzpotential gemessene Messgröße Reynolds-Zahl abhängig ist. Sind beide Messgrößen bekannt, lässt sich die Reynolds-Zahl ermitteln. Ein Umschalten der Spuleneinstellungen ist nicht notwendig und die Bestimmung der Reynolds-Zahl kann bereits in einer einzelnen Messphase erfolgen.

Die Messschaltung ist vorzugsweise dermaßen ausgebildet, dass sie eine erste Potentialdifferenz $U_1$ zwischen einem ersten Messelektrodenpaar und eine zweite Potentialdifferenz $U_2$ zwischen einem zweiten Messelektrodenpaar ermittelt. Die Bestimmung der Messspannung erfolgt entweder durch das direkte Messen der Potentialdifferenz zwischen den beiden Messelektroden oder durch das Messen des jeweils an den Messelektroden vorherrschenden, elektrischen Potentials in Bezug auf ein Referenzpotential und dem Bilden einer Differenz. Dabei gilt $U_1 = f_1(Re)\,S_1 \cdot u$ und $U_2 =$ $f_2(Re) \cdot S_2 \cdot u$, wobei $f_1(Re)$ und $f_2(Re)$ jeweils einen Reynolds-Zahl-abhängigen Korrekturfaktor beschreiben. Die ermittelten Messwerte werden an eine Auswerteschaltung weitergeleitet, die eine Speichereinheit umfasst, in der Referenzwerte und Reynolds-Zahlen hinterlegt sind bzw. in der eine mathematische Funktion, welche Reynolds-Zahlen Referenzwerten zuordnet hinterlegt ist.

Alternativ wird die erste Potentialdifferenz $U_1$ am ersten Messelektrodenpaar und ein elektrisches Potential in Bezug auf ein Referenzpotential an der dritten Messelektrode gemessen.

Es ist besonders vorteilhaft, wenn die Auswerteschaltung dazu eingerichtet ist, Quotienten aus den Messwerten zu bilden, diese mit den Referenzwerten im Datenspeicher abzugleichen und die dem Referenzwert zugeordnete Reynolds-Zahl zu bestimmen bzw. auszulesen. Alternativ kann eine mathematische Funktion in der Speichereinheit hinterlegt sein, die Messwerte der ersten und zweiten Messgröße oder einen Term, der von der ersten und der zweiten Messgröße abhängt, der Reynolds-Zahl des Mediums zuordnet. In dem Fall ist die Auswerteschaltung dazu eingerichtet die Reynolds-Zahl mit den gemessenen Messwerten der beiden Messgrößen und der hinterlegten mathematischen Funktion zu bestimmen. Ist die Reynolds-Zahl, die Durchflussgeschwindigkeit und der Rohrdurchmesser bekannt, kann die kinematische Viskosität ausgerechnet werden, für die $v = u \cdot DN/Re$ gilt.

Messschaltungen im Bereich der Durchflussmesstechnik sind hinlänglich bekannt. Die Aufgabe der Messschaltung ist es sehr kleine Absolutwerte und Änderungen der jeweiligen Messgröße zu detektieren. Es gibt eine Vielzahl an unterschiedlichen Ausgestaltungen, die jeweils ihre Vor- und Nachteile haben. Zum Einen kann die Messschaltung dazu eingerichtet sein, ein Potential an einer der Messelektrode in Bezug auf ein Referenzpotential abzugreifen. Somit kann selbst dann, wenn eine der zwei Messelektroden ausfällt, weiterhin die Durchflussgeschwindigkeit anhand eines ermittelten Potentials bestimmt werden. Als Referenzpotential eignet sich das Gehäusepotential oder ein Erdpotential. Zum Anderen kann die Messchaltung so ausgebildet sein, dass sie eine zwischen zwei Messelektroden vorherrschende Potentialdifferenz detektiert und aufnimmt. Eine Messschaltung umfasst daher üblicherweise einen Analog/Digital-Wandler, der die eingehende Signale, in dem Fall die aktuell an dem jeweiligen Messelektrodenpaar anliegende Potentialdifferenz, in digitale Daten umwandelt, die dann durch eine Auswerteschaltung weiterverarbeitet oder gespeichert werden. Es sind aber auch andere Messumsetzer oder Messumformer der Digitalen Messtechnik bekannt und geeignet.

Die Auswerteschaltung ist dazu eingerichtet die durch die Messschaltung gemessenen Messwerte zu verarbeiten und die gesuchte Messgröße aus dem Rauschen zu ermitteln. Eine Auswerteschaltung umfasst daher üblicherweise Mikroprozessoren, Verstärker und Rauschfilter. Die Mess- und Auswerteschaltung können modular ausgebildet sein und mittels einer drahtlosen Verbindung kommunizieren, oder Teil einer einzelnen Mess- und Auswerteelektronik sein, die in einem Gehäuse des Messgerätes angeordnet ist.

Die Position der dritten Messelektrode ist dahingehend optimiert, dass sich der Quotient der ersten und zweiten Potentialdifferenz $U_1/U_2$ bijektiv zur Reynolds-Zahl des fließenden Mediums im Messrohr verhält. Die Optimierung kann experimentell oder mittels eines Simulationsverfahrens erfolgen, beispielsweise mittels Finite-Elemente Simulationen.

Für den Quotienten $U_1/U_2$ ergibt sich unter der Annahme, dass die Durchflussgeschwindigkeit im Messrohr konstant ist bzw. dass die jeweils induzierte Messspannung einer gemeinsamen Durchflussgeschwindigkeit u entspringt

$$\frac{U_1}{U_2} = \frac{f_1(Re)}{f_2(Re)} \cdot \frac{S_1}{S_2} = g(Re) \cdot \frac{S_1}{S_2}.$$

Gemäß dem Fall, dass g(Re) invertierbar ist gilt außerdem

$$Re = g^{-1}\left(U_1 \cdot \frac{S_2}{S_1 \cdot U_2}\right),$$

wobei $g^{-1}$ die Umkehrfunktion von g ist. Die Bijektivität des Quotienten kann am einfachsten dadurch realisiert werden, dass die erste und die zweite Messelektrode so im Messrohr angebracht werden, dass der erste Korrekturfaktor $f_1(Re)$ über den Reynolds-Zahlenbereich Reynolds-Zahl-unabhängig ist. In diesem Fall muss der zweite Korrekturfaktor $f_2$ bijektiv mit der Reynolds-Zahl korrespondieren. Die Position der dritten Messelektrode wird daher idealerweise so gewählt, dass die Änderung des Korrekturfaktors $f_2(Re)$ bzw. die Steigung des Quotienten für unterschiedliche Reynolds-Zahlen möglichst groß ist.

Die Positionierung der einzelne Messelektroden im Messrohr ist ausschlaggebend für die Bestimmung der Reynolds-Zahl oder der kinematischen Viskosität. Zur Bestimmung der Reynolds-Zahl werden Messwerte zweier Messgrößen benötigt. Die erste Messgröße wird mit der Messschaltung an einem Messelektrodenpaar ermittelt. Das gleiche gilt vorzugsweise auch für die zweite Messgröße. Die Position der einzelnen Messelektroden kann jedoch nicht beliebig gewählt werden. Es muss gelten, dass der Quotient der Messwerte der ersten und der zweiten Messgröße bijektiv mit der Reynoldszahl des fließenden Mediums im Messrohr korrespondiert. Das heißt, dass die Quotienten der Messwerte der ersten und der zweiten Messgröße, gemessen über einen Reynolds-Zahlenbereich, durch eine Funktion beschrieben werden kann, die bijektiv zur Reynolds-Zahl ist bzw. dass die Menge der Quotienten der Messwerte über einen Reynolds-Zahlenbereich bijektiv zu der verknüpften Menge der Reynolds-Zahlen korrespondiert.

Dies wird beispielsweise dadurch realisiert, dass man das erste Messelektrodenpaar diametral an das Messrohr anbringt, wie es bei konventionellen Durchflussmessgeräten üblich ist, und die dritte Messelektrode bzw. die dritte und die vierte Messelektrode versetzt zum ersten Messelektrodenpaar anordnet.

Somit sind die Messwerte der ersten Messgröße im Wesentlichen Reynolds-Zahl-unabhängig und die Messwerte der zweite Messgröße Reynolds-Zahl-abhängig. Dies ist jedoch nicht die einzige Möglichkeit ein erfindungsgemäßes Durchflussmessgerät zu realisieren. Es ist auch vorstellbar, dass alle Messelektroden so angeordnet werden, dass die an den Messelektroden über den Reynolds-Zahlenbereich bzw. über einen Teil des Reynolds-Zahlenbereich abgegriffenen Messwerte Reynolds-Zahl-abhängig sind. In diesem Fall muss aber der Quotient der Messwerte bijektiv mit der Reynolds-Zahl korrespondieren, damit die Reynolds-Zahl bestimmt werden kann.

Die Auswerteschaltung weist üblicherweise eine Speichereinheit auf, wobei die Speichereinheit einen ersten Datensatz aufweist mit Referenzwerten, die mit der ersten und zweiten Messgröße korrelieren, und insbesondere proportional zum Quotienten der ersten und zweiten Messgröße sind, wobei die Speichereinheit einen zweiten Datensatz aufweist mit Reynolds-Zahlen, wobei der erste und der zweite Datensatz bijektiv korrespondieren, wobei die Auswerteschaltung dazu eingerichtet ist anhand des ersten und zweiten Messgröße die korrespondierende Reynolds-Zahl des Mediums im Messrohr zu ermitteln.

Als Speichereinheit eignet sich nicht flüchtiger Speicher, wie Flash-Speicher oder EPROM. Diese kann in der Auswerteschaltung integriert oder separat bereitgestellt sein. Die Speichereinheit weist vorzugsweise mindestens einen ersten und einen zweiten Datensatz auf. Im ersten Datensatz sind Referenzwerte hinterlegt. Diese stammen von Computer-Simulationen oder von Justiermessungen. Die Referenzwerte können beispielsweise Quotienten der simulierten oder gemessenen Messwerte der ersten Messgröße und der zweiten Messgröße sein. Der zweite Datensatz weist Reynolds-Zahlen auf, die den Quotienten zugeordnet sind. Alternativ können Paare, aus jeweils einer Reynolds-Zahl und einem Referenzwert in der Speichereinheit hinterlegt sein.

Alternativ kann in der Speichereinheit auch eine mathematische Funktion hinterlegt sein, die den zwei Messgrößen oder einem Term, der von den zwei Messgrößen abhängt Reynolds-Zahlen zuordnet.

Die Testmessung erfolgt experimentell oder mittels eines Simulationsprogrammes.

Vorteilhafte Ausgestaltungen der Erfindung sind Gegenstand der Unteransprüche.

Gemäß einer ersten Ausgestaltung liegen die Messelektroden im Wesentlichen in einer Querschnittsebene, wobei ein die zweite Messelektrode schneidender erster Radius und ein die dritte Messelektrode schneidender zweiter Radius einen Winkel $\alpha$ aufspannen mit $\alpha \geq 20°$, insbesondere $\alpha \geq 30°$ und bevorzugt $40° \leq \alpha \leq 60°$, wobei die Messschaltung dazu eingerichtet ist Messwerte der ersten Messgröße zwischen der ersten und der zweiten Messelektrode zu ermitteln, wobei die Messschaltung dazu eingerichtet ist Messwerte der zweiten Messgröße zwischen der ersten und der dritten Messelektrode oder an der dritten Messelektrode in Bezug zum Referenzpotential zu ermitteln.

Es ist vorteilhaft, wenn das Durchflussmessgerät genau drei Messelektroden aufweist. Dadurch reduziert sich die Anzahl an potentiellen Leckage-Stellen auf drei. Diese Ausgestaltung lässt sich am einfachsten dadurch realisieren, dass ein herkömmliches magnetisch-induktives Durchflussmessgerät mit zwei Messelektroden um eine weitere Messelektrode erweitert wird. Unter Einhalten der beanspruchten Winkel lässt sich somit ein magnetisch-induktives Durchflussmessgerät realisieren, das die Voraussetzung zur Bestimmung der Reynolds-Zahl des Mediums erfüllt.

Gemäß einer zweiten Ausgestaltung verlaufen eine eine erste und eine zweite Messelektrode schneidende erste Messelektrodenachse und eine eine dritte und eine vierte Messelektrode schneidende zweite Messelektrodenachse im Wesentlichen parallel, wobei die Messschaltung dazu eingerichtet ist Messwerte der ersten Messgröße zwischen der ersten und der zweiten Messelektrode zu ermitteln, wobei die Messschaltung dazu eingerichtet ist Messwerte der zweiten Messgröße zwischen der dritten und der vierten Messelektrode zu ermitteln.

Bei herkömmlichen magnetisch-induktiven Durchflussmessgerät wird das Magnetsystem und die Position der Messelektroden dahingehend optimiert, dass das jeweils an den Messelektroden vorherrschende elektrische Potential linear mit der Durchflussgeschwindigkeit korreliert. Fügt man nun eine dritte Messelektrode hinzu und misst die Potentialdifferenz zwischen der dritten und einer der beiden Messelektroden, so geht immer der Einfluss des linearisierten Systems mit in die zweite Messgröße ein.

Diese sollte jedoch über einen möglichst großen Reynolds-Zahlenbereich Reynolds-Zahl-abhängig sein.

Es ist daher besonders vorteilhaft, wenn die Messwerte der zweiten Messgröße an der dritten und einer vierten Messelektrode abgegriffen werden, die versetzt zum ersten Messelektrodenpaar angeordnet sind. Dadurch ist auch die am zweiten Messelektrodenpaar anliegende Potentialdifferenz von den beiden Potentialen der ersten Messgröße entkoppelt.

Es ist besonders vorteilhaft, wenn das erste Messelektrodenpaar diametral bzw. auf der Querachse des Messrohr liegend angeordnet ist.

Gemäß einer Ausgestaltung ist die erste Messgröße und die zweite Messgröße eine Potentialdifferenz zwischen jeweils einem Messelektrodenpaar.

Um Common-Mode Störungen zu vermeiden und somit das Rauschen im Signal zu minimieren, ist es vorteilhaft, wenn es sich bei den beiden Messgrößen nicht um Potentiale im Bezug zu einem Referenzpotential handelt, sondern um Potentialdifferenzen, die gemessen werden.

Gemäß einer Ausgestaltung ist die Reynolds-Zahl des Mediums im Messrohr größer 1000, insbesondere größer 5 000 und bevorzugt größer 10 000 ist, wobei die Reynolds-Zahl des Mediums im Messrohr kleiner 1 000 000, insbesondere kleiner 500 000 und bevorzugt kleiner 100 000 ist.

Gemäß einer Ausgestaltung verhält sich die erste Messgröße bei der Testmessung in einem Reynolds-Zahlenbereich von $10\,000 \leq Re \leq 1\,000\,000$ im Wesentlichen proportional zur Durchflussgeschwindigkeit des Mediums, wobei die Änderung der zweiten Messgröße bei der Testmessung in einem Reynolds-Zahlenbereich von $10\,000 \leq Re \leq 1\,000\,000$ mit zunehmender Reynolds-Zahl nicht konstant ist.

Bei Reynolds-Zahlen kleiner 1 000 befindet sich die Strömung in einem Übergangsbereich zwischen turbulenter und laminarer Strömung und $f(Re)$ lässt sich nicht mehr durch eine definierte Funktion beschreiben. $f(Re)$ weist ein HystereseVerhalten auf oder variiert über die Zeit. Bei großen Reynolds-Zahlen ist das Strömungsprofil Reynolds-Zahl-unabhängig und somit $f(Re)$ für beide Messgrößen konstant. In dem Fall kann die Reynolds-Zahl nicht bestimmt werden.

Gemäß einer Ausgestaltung ist in der Testmessung das Medium ein newtonsches Fluid, insbesondere Wasser, wobei in der Testmessung das Durchflussmessgerät so in einer Rohrleitung mit einer geraden Einlaufstrecke von mindestens 20 DN und bevorzugt mindestens 50 DN eingebracht ist, dass in einem Messbereich ein im Wesentlichen symmetrisches Strömungsprofil vorliegt, wobei das Messrohr einen Durchmesser von DN 80 aufweist.

Gemäß einer Ausgestaltung umfasst die magnetfelderzeugende Vorrichtung zwei insbesondere gegenüberliegend angebrachte Spulen, die gleichsinnig in Serie geschaltet sind.

Zwei gegenüberliegend angeordnete und gleichsinnig in Serie geschaltete Spulen erzeugen jeweils ein Magnetfeld, das vorwiegend in dieselbe Richtung wie das jeweils durch die andere Spule erzeugte Magnetfeld zeigt. Dabei verlaufen die sich zwischen den beiden Spulen ausbildenden Magnetfeldlinien im Wesentlichen parallel zu einer die beiden Spulen verbindenden Symmetrieachse. Es gilt außerdem, dass bei gleichsinnig in Serie geschaltete Spulen die Spulen gleichsinnig stromdurchflossen sind. Die EP 0 770 855 A1 lehrt die Magnetfeldverteilung gleichsinnig und gegensinnig in Serie geschalteter Spulen.

Das erfindungsgemäße Verfahren zum Betreiben eines magnetisch-induktiven Durchflussmessgerätes umfasst die Verfahrensschritte:

- Erfassen eines Messwertes einer ersten Messgröße und eines Messwertes einer zweiten Messgröße, wobei die jeweiligen Messwerte der beiden Messgrößen an unterschiedlichen Messelektrodenpaaren ermittelt werden;

- Ermitteln einer von den Messwerten der ersten und der zweiten Messgröße abhängigen Reynolds-Zahl.

Das Erfassen der Messwerte ersten und zweiten Messgröße erfolgt mit einer Messschaltung. Die erfassten Messwerte werden in der Auswerteschaltung ausgewertet und die vorliegende Reynolds-Zahl des Mediums ermittelt.

Es ist besonders vorteilhaft, wenn ein Quotient aus dem ersten und zweiten Messwert gebildet und dieser mit hinterlegten Referenzwerten in der Speichereinheit abgeglichen wird. Die Referenzwerte können in dem Fall Quotienten von Messdaten sein, die zuvor im Justierverfahren an den Messelektrodenpaaren abgegriffen wurden. Alternativ kann auch eine mathematische Funktion in der Speichereinheit hinterlegt sein, die den Zusammenhang zwischen Reynolds-Zahl und den beiden Messgrößen oder dem von beiden Messgrößen abhängigen Term beschreibt. Die mathematische Funktion kann beispielsweise ein Polynom insbesondere ein Polynom höherer Ordnung sein, das von den bei der Justierung bestimmten Messdaten abgeleitet wurde. Erfüllen die Messgrößen die oben genannte Bedingung der Bijektivität, so lässt sich die Reynolds-Zahl bestimmen.

Eine Abbildung, welche Reynolds-Zahlen Quotienten der ersten und der zweiten Messgröße zumindest in einem Reynolds-Zahlenbereich von $10\ 000 \le Re \le 100\ 000$, zuordnet, ist bijektiv.

Vorteilhafte Ausgestaltungen der Erfindung sind Gegenstand der Unteransprüche. Gemäß einer Ausgestaltung umfasst das erfindungsgemäße Verfahren den Verfahrensschritt:

- Bilden einer korrigierten Durchflussgeschwindigkeit und/oder eines korrigierten Volumendurchflusses mittels eines Korrekturfaktors, wobei der Korrekturfaktor von der ermittelten Reynolds-Zahl abhängt.

Es ist besonders vorteilhaft, wenn in der Speichereinheit Korrekturfaktoren, insbesondere einer der beiden Korrekturfaktoren $f_1$ und $f_2$ hinterlegt sind, die zur genaueren Bestimmung der Durchflussgeschwindigkeit und/oder des Volumendurchflusses dienen. Die Korrekturfaktoren können in einem Simulationsverfahren bestimmt oder beim Justierverfahren ermittelt bzw. gemessen werden.

Gemäß einer Ausgestaltung umfasst das erfindungsgemäße Verfahren den Verfahrensschritt:

- Ermitteln eines kinematischen Viskositätswertes, wobei der kinematische Viskositätswert mittels Messwerte der ersten oder der zweiten Messgröße und der ermittelten Reynolds-Zahl bestimmt wird.

Die Ausgabe der Messwerte erfolgt beispielsweise über ein an das Durchflussmessgerät angebrachtes oder mit den Durchflussmessgerät verbundenen Display. Alternativ kann das Display auch Teil eines Smartphones oder Laptops sein und über eine kabellose Verbindung die anzuzeigenden Messwerte von der Auswerteschaltung erhalten. Alternative und in der Prozessautomatisierung bekannte Ausgabeeinheiten sind Systeme zur Datenübertragung, wie Feldbusse oder Echtzeit-Ethernet.

Die Erfindung wird anhand der nachfolgenden Figuren näher erläutert. Es zeigt:

     Fig. 1: eine Querschnittsdarstellung eines magnetisch-induktiven Durchflussmessgerät nach dem Stand der Technik;

     Fig. 2: eine Querschnittsdarstellung eines ersten Ausführungsbeispiels des erfindungsgemäßen magnetisch-induktiven Durchflussmessgerätes;

     Fig. 3: eine Querschnittsdarstellung eines zweiten Ausführungsbeispiels des erfindungsgemäßen magnetisch-induktiven Durchflussmessgerätes;

     Fig. 4: zwei Diagramme, wobei das erste Diagramm die Funktionen $f_1$ und $f_2$ in Abhängigkeit der Reynolds-Zahl und das zweite Diagramm den Quotienten g der beiden Funktionen $f_1$ und $f_2$ in Abhängigkeit der Reynolds-Zahl abbildet; und

     Fig. 5: ein Flussdiagramm eines Ausführungsbeispiels des Verfahrens zum Betreiben des magnetisch-induktiven Durchflussmessgerätes.

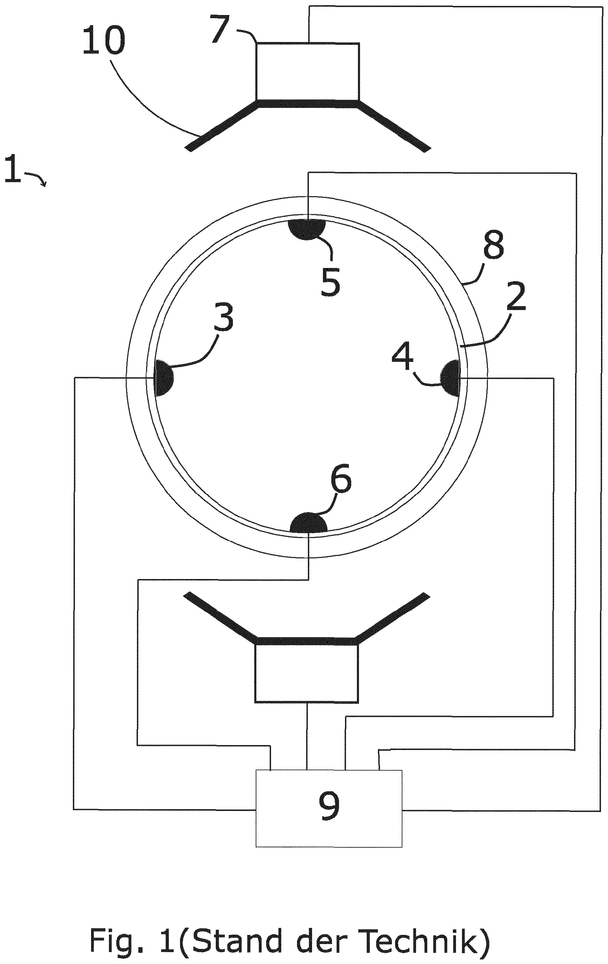

Die Fig. 1 zeigt ein aus dem Stand der Technik bekanntes magnetisch-induktives Durchflussmessgerät. Der Aufbau und das Messprinzip eines magnetisch-induktiven Durchflussmessgerätes sind grundsätzlich bekannt. Durch ein Messrohr (1) wird ein Medium geleitet, das eine elektrische Leitfähigkeit aufweist. Eine magnetfelderzeugende Vorrichtung (7) ist so angebracht, dass sich die Magnetfeldlinien im Wesentlichen senkrecht zu einer durch die Messrohrachse definierten Längsrichtung orientieren. Als magnetfelderzeugende Vorrichtung (7) eignet sich vorzugsweise eine Sattelspule oder ein Polschuh (10) mit aufgesetzter Spule und Spulenkern. Bei angelegtem Magnetfeld entsteht im Messrohr (1) eine durchflussabhängige Potentialverteilung, die mit zwei an der Innenwand des Messrohres (1) gegenüberliegend, angebrachten Messelektroden (3, 4) abgegriffen wird. In der Regel sind diese diametral angeordnet und bilden eine Elektrodenachse bzw. werden durch eine Querachse geschnitten, die senkrecht zu den Magnetfeldlinien und der Längsachse des Rohres verläuft. Anhand der gemessenen Messspannung $U$ kann, unter Berücksichtigung der magnetischen Flussdichte, die Durchflussgeschwindigkeit und, unter zusätzliche Berücksichtigung der Rohrquerschnittsfläche, der Volumendurchfluss des Mediums bestimmt werden. Um das Ableiten der an der ersten und zweiten Messelektrode (3, 4) anliegenden Messspannung über das Rohr (8) zu verhindern, wird die Innenwand mit einem isolierenden Material, beispielsweise einem Kunststoff-Liner (2) ausgekleidet. Das durch eine magnetfelderzeugende Vorrichtung (7), beispielsweise einen Elektromagneten, aufgebaute Magnetfeld wird durch einen mittels einer Betriebsschaltung getakteten Gleichstrom wechselnder Polarität erzeugt. Dies gewährleistet einen stabilen Nullpunkt und macht die Messung unempfindlich gegenüber Einflüssen durch elektrochemische Störungen. Eine Messschaltung ist dazu eingerichtet die an der ersten und zweiten Messelektroden (3, 4) anliegende Messspannung auszulesen und eine Auswerteschaltung ist dazu ausgebildet die Durchflussgeschwindigkeit und/oder Volumendurchfluss des Mediums zu ermitteln. Handelsübliche magnetisch-induktive Durchflussmessgeräte weisen zusätzlich zu den Messelektroden (3, 4) zwei weitere Elektroden (5, 6) auf. Zum einen dient eine optimalerweise am höchsten Punkt im Rohr (8) angebrachte Füllstandsüberwachungselektrode (5) dazu, eine Teilbefüllung des Messrohres (1) zu detektieren, und ist dazu eingerichtet diese Information an den Nutzer weiterzuleiten und/oder den Füllstand bei der Ermittlung des Volumendurchflusses zu berücksichtigen. Des Weiteren dient eine Bezugselektrode (6), die üblicherweise diametral zur Füllstandsüberwachungselektrode (5) bzw. am untersten Punkt des Rohrquerschnittes angebracht ist, dazu eine ausreichende Erdung des Mediums zu gewährleisten.

Magnetisch-induktive Durchflussmessgeräte nach dem Stand der Technik sind gemäß ihrer Messelektrodenpositionierung und Ausgestaltung der magnetfelderzeugenden Vorrichtung dahingehend optimiert, dass das Durchflussmessgerät linear ist, d.h. dass für einen angegebenen Messbereich der Korrekturfaktor $f(Re)$ im Wesentlichen konstant ist. Somit gilt in erster Näherung die Vereinfachung

$$U = f \cdot S \cdot u,$$

wobei $f$ für einen Reynolds-Zahlenbereich als konstant angenommen wird, und $S$ über eine Justierung bestimmt wird, d.h. in einer bekannten Messumgebung gemessen und dann im Messgerät für die Bestimmung der Durchflussgeschwindigkeit und/oder des Volumendurchflusses hinterlegt.

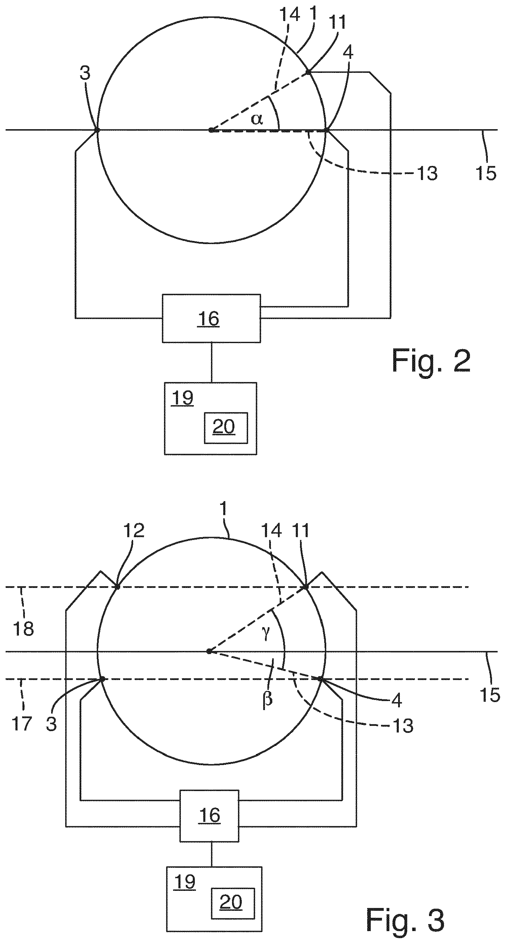

Die Fig. 2 zeigt einen schematischen Querschnitt eines ersten Ausführungsbeispiels des erfindungsgemäßen Durchflussmessgerätes. Die erste und die zweite Messelektrode (3, 4) sind diametral angeordnet und so an die magnetfelderzeugende Vorrichtung angepasst, dass das Durchflussmessgerät über den angegebenen Reynolds-Zahlenbereich linear ist. Neben der ersten und der zweiten Messelektrode (3, 4) ist eine dritte Messelektrode (11) im Messrohr (1) angeordnet. Ein die dritte Messelektrode (11) schneidender zweiter Radius (14) und eine Querachse des Messrohres (15) spannen einen Mittelpunktswinkel $\alpha$ auf. Die Messschaltung (16) ist dermaßen ausgebildet, dass sie eine erste Potentialdifferenz $U_1$ zwischen der ersten und der zweiten Messelektrode (3, 4) und eine zweite Potentialdifferenz $U_2$ zwischen der ersten und der dritten Messelektrode (3, 11) abgreift, mit $U_1 = f_1(Re) \cdot S_1 \cdot u$ und $U_2 = f_2(Re) \cdot S_2 \cdot u$, wobei $f_1(Re)$ und $f_2(Re)$ jeweils einen Reynolds-Zahl-abhängigen Korrekturfaktor beschreiben. Die Position der dritten Messelektrode (11) bzw. der Mittelpunktswinkel $\alpha$ ist dahingehend optimiert, dass sich der Quotient der ersten und zweiten Potentialdifferenz $U_1/U_2$ bijektiv zur Reynolds-Zahl des fließenden Mediums im Messrohr verhält bzw. dass sich eine mathematische Funktion, die die Reynolds-Zahl auf den Quotienten abbildet bijektiv ist. Die Optimierung der Anordnung kann experimentell oder mittels eines Simulationsverfahrens erfolgen, beispielsweise mittels Finite-Elemente Simulationen.

Für den Quotienten $U_1/U_2$ ergibt sich

$$\frac{U_1}{U_2} = \frac{f_1(Re)}{f_2(Re)} \cdot \frac{S_1}{S_2} = g(Re) \cdot \frac{S_1}{S_2}.$$

Gemäß dem Fall, dass g(Re) invertierbar ist gilt außerdem

$$Re = g^{-1}\left(U_1 \cdot \frac{S_2}{S_1 \cdot U_2}\right),$$

wobei $g^{-1}$ die Umkehrfunktion von g ist. Die Bijektivität des Quotienten kann am einfachsten dadurch realisiert werden, dass die erste und die zweite Messelektrode so im Messrohr angebracht werden, dass der erste Korrekturfaktor $f_1(Re)$ über den Reynolds-Zahlenbereich Reynolds-Zahl-unabhängig ist. In diesem Fall muss der zweite Korrekturfaktor $f_2$ bijektiv mit der Reynolds-Zahl korrespondieren.

Die Messschaltung (16) ist dazu eingerichtet eine Potentialdifferenz zwischen der ersten und der zweiten Messelektrode (3, 4) und eine Potentialdifferenz an der ersten und der dritten Messelektrode (3, 11) abzugreifen oder ein elektrisches Potential an der dritten Messelektrode in Bezug auf ein Referenzpotential zu messen. Die Messdaten werden an eine Auswerteeinheit weitergeleitet, die eine Speichereinheit umfasst, in der Referenzwerte und Reynolds-Zahlen hinterlegt sind. Die Auswerteschaltung ist dazu eingerichtet aus den gemessenen Messdaten und den hinterlegten Referenzdaten die Reynolds-Zahl des Mediums im Messrohr zu bestimmen. Ist die Reynolds-Zahl bekannt, so lässt sich die kinematische Viskosität mit Hinzunahme der Messwerte der ersten oder der zweiten Messgröße oder der bereits bestimmten Durchflussgeschwindigkeit bzw. des Volumendurchflusses berechnen. Die Messschaltung, Auswerteschaltung und die Speichereinheit können anders als in der schematischen Darstellung abgebildet auf einer Elektronikeinheit angeordnet sein.

Die Fig. 3 zeigt einen schematischen Querschnitt einer zweiten Ausgestaltung des erfindungsgemäßen Durchflussmessgerätes. Dabei werden die erste und die zweite Messelektrode (3, 4), die ein erstes Elektrodenpaar bilden, durch eine erste Messelektrodenachse (17) geschnitten, die parallel zu einer die dritte Messelektrode (11) und eine weitere, vierte Messelektrode (12) schneidende, zweite Messelektrodenachse (18) und der Querachse (15) verläuft. Die dritte und vierte Messelektrode (11, 12) bilden eine zweites Messelektrodenpaar. Ein erster Radius (13), der die zweite Messelektrode (4) schneidet, und die Querachse (15) spannen einen Mittelpunktswinkel $\beta$ auf. Der die dritte Messelektrode (11) schneidende zweite Radius (14) und die Querachse (15) spannen einen Mittelpunktswinkel $\gamma$ auf. Die Messschaltung (16) ist dazu ausgebildet die erste Potentialdifferenz an dem ersten Messelektrodenpaar und die zweite Potentialdifferenz an dem zweiten Messelektrodenpaar abzugreifen. Beide Mittelpunktswinkel $\beta$ und $\gamma$ sind dahingehend gewählt bzw. optimiert, dass bei einer Testmessung der Quotient der ersten und zweiten Potentialdifferenz $U_1/U_2$ bzw. der Messwerte und die Reynolds-Zahl des fließenden Mediums bijektiv korrespondieren. Im einfachsten Fall wird der Mittelpunktswinkel $\beta$ gleich Null gesetzt und der Mittelpunktswinkel $\gamma$ so lange angepasst, bis die oben genannte Bedingung erfüllt ist, insbesondere die Bedingung für den Reynolds-Zahlenbereich $10\,000 \le Re \le 1\,000\,000$ erfüllt.

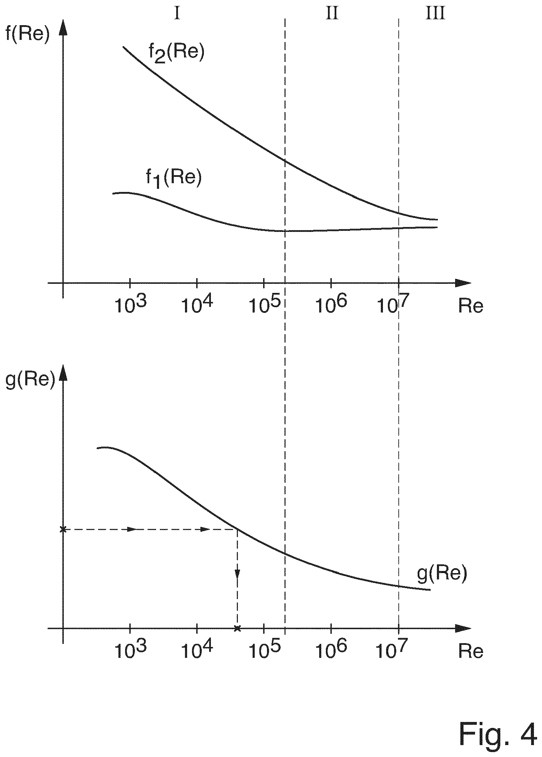

Die Fig. 4 zeigt zwei Diagramme, wobei das erste Diagramm einen Zusammenhang zwischen der einzelnen Korrekturfaktoren $f_1$, $f_2$ und der Reynolds-Zahl des fließenden Mediums im Messrohr darstellt und das zweite Diagramm eine Zusammenhang zwischen den Quotienten der Korrekturfaktoren $g$ und der Reynolds-Zahl des fließenden Mediums im Messrohr darstellt. Die beiden Diagramme beschränken sich auf einen Reynolds-Zahlenbereich von ca. $10^3$ bis $10^7$. Die Korrekturfaktoren $f_1$ und $f_2$ sind jeweils mit einer der zwei von unterschiedlichen Messelektrodenpaaren abgegriffenen Potentialdifferenzen verknüpft. Der Verlauf der Funktionen $f_1$ und $f_2$ weist drei Bereiche (I, II, III) auf. Im ersten und dritten Bereich (I, III) ist der Verlauf der $f_1$ nicht konstant. In diesem Beispiel weist der Verlauf im ersten Bereich (I) eine negative Steigung und im dritten Bereich (III) eine positive Steigung auf. Im zweiten Bereich (II) hingegen ist der Verlauf der $f_1$ konstant. Das Durchflussmessgerät ist für diesen Reynolds-Zahlenbereich linear. Die zweite Funktion $f_2$ ist mindestens im zweiten Bereich bijektiv. Im abgebildeten Beispiel ist der Verlauf der $f_2$ auch im ersten und dritten Bereich bijektiv (I, III). Daraus ergibt sich für den Quotienten $g$, dass er in den Bereichen eins bis drei (I, II, III) bijektiv ist. Somit lässt sich jedem Quotienten der Messdaten der beiden Messgrößen eindeutig eine Reynolds-Zahl zuordnen. Für die Bereiche, in denen die Durchflussgeschwindigkeit empfindlich gegenüber Reynolds-Zahl-Änderungen ist (siehe Bereich I und III) können Messabweichungen unter Berücksichtigung der Korrekturfunktion korrigiert werden.

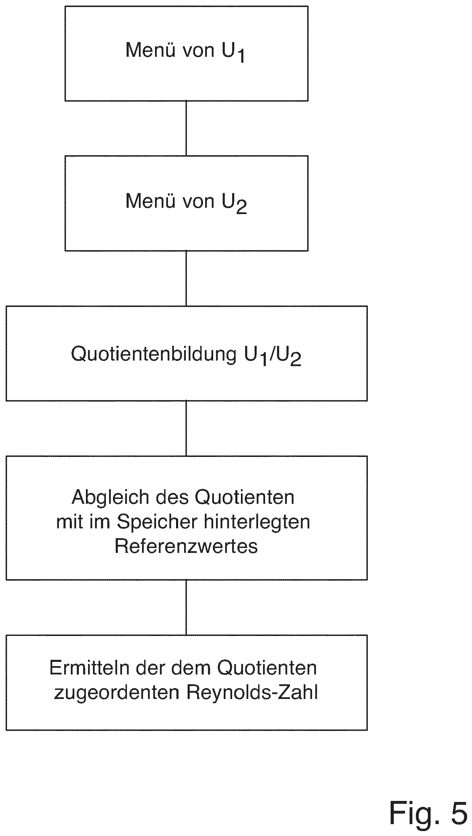

Die Fig. 5 zeigt ein Flussdiagramm einer Ausgestaltung des Verfahrens zum Betreiben eines magnetisch-induktiven Durchflussmessgerätes. In einem ersten Schritt wird die erste Potentialdifferenz $U_1$ an dem ersten Messelektrodenpaar gemessen. In einem zweiten Schritt wird die zweite Potentialdifferenz $U_2$ an dem zweiten Messelektrodenpaar gemessen. Alternativ zum Messen der Potentialdifferenz können auch in beiden zuvor genannten Schritten die Potentiale an den jeweiligen Messelektroden in Bezug zum Referenzpotential gemessen werden und die Differenz beispielsweise in der Auswerteschaltung gebildet werden. Die beiden ersten Schritte müssen nicht nachträglich, sondern können auch gleichzeitig erfolgen. Es kann auch die zweite Potentialdifferenz $U_2$ zuerst und dann die erste Potentialdifferenz $U_1$ gemessen werden. Üblicherweise werden jedoch Messspannungen zweier Messphasen, in denen jeweils unterschiedliche, insbesondere entgegengesetzte Gleichspannungen an die Spulen angelegt sind und in denen das Magnetfeld eingeschwungen ist, für die Bestimmung der Durchflussgeschwindigkeit bzw. des Volumendurchflusses berücksichtigt. Dadurch kann ein Offset in der Messspannung kompensiert werden. Die Messung der Potentialdifferenz bzw. der Potentiale erfolgt über eine Messschaltung. Die Auswerteschaltung bildet einen Quotienten aus den beiden gemessenen Messwerten, insbesondere Potentialdifferenzen, und vergleicht diesen Quotienten mit einer diesem ermittelten Quotienten zugeordneten Reynolds-Zahl. Diese ist in einem Speicher hinterlegt. Im Speicher kann alternativ auch eine mathematische Gleichung oder eine mathematische Funktion hinterlegt sein, die eine Reynolds-Zahl oder einen Reynolds-Zahlenbereich einem Quotienten zuordnet. Alternativ können im Speicher auch Daten hinterlegt sein, die in einem Justierverfahren ermittelt worden sind. Die Daten können die im Justierverfahren gemessenen Referenzwerte sein, aber auch extrapolierte Werte bzw. Werte einer beispielsweise geglätteten Kennlinie oder Fit-Funktion der Messdaten. Die Referenzwerte können in einem Justierverfahren experimentell oder mittels eines Simulationsprogrammes bestimmt sein.

**Bezugszeichenliste**

| | |
|---|---|
| 1 | Messrohr |
| 2 | Liner |
| 3 | erste Messelektrode |
| 4 | zweite Messelektrode |
| 5 | Füllstandsüberwachungselektrode |
| 6 | Bezugselektrode |

| | |
|---|---|
| 7 | magnetfelderzeugende Vorrichtung |
| 8 | Rohr |
| 9 | Mess-, Betriebs- und/oder Auswerteschaltung |
| 10 | Polschuh |
| 11 | dritte Messelektrode |
| 12 | vierte Messelektrode |
| 13 | erster Radius |
| 14 | zweiter Radius |
| 15 | Querachse |
| 16 | Messschaltung |
| 17 | erste Gerade |
| 18 | zweite Gerade |
| 19 | Auswerteschaltung |
| 20 | Speichereinheit |
| 21 | Spule |
| I | erster Bereich |
| II | zweiter Bereich |
| III | dritter Bereich |

**Patentansprüche**

1. Magnetisch-induktives Durchflussmessgerät, umfassend:

   - ein Messrohr (1) zum Führen eines fließfähigen Mediums,
   wobei das Messrohr (1) eine Wandung aufweist;
   - mindestens drei Messelektroden (3, 4, 11, 12), die in der Wandung angeordnet sind, zum Bilden jeweils eines galvanischen Kontaktes mit dem fließenden Medium;
   - mindestens eine magnetfelderzeugende Vorrichtung (7) zum Erzeugen eines das Messrohr durchsetzenden Magnetfeldes, und
   - eine Messschaltung (16), die dazu eingerichtet ist mindestens eine erste Messgröße zu ermitteln,
   wobei Messwerte der ersten Messgröße an einem ersten Messelektrodenpaar ermittelt werden,
   - eine Auswerteschaltung (19), die dazu eingerichtet ist eine Reynolds-Zahl und/oder einen kinematischen Viskositätswert des Mediums im Messrohr (1) mittels Messwerte der ersten und einer zweiten Messgröße, die sich von der ersten Messgröße unterscheidet zu ermitteln,

     wobei Messwerte der zweiten Messgröße an einem zweiten Messelektrodenpaar oder an einer dritten Messelektrode (11) in Bezug auf ein Referenzpotential ermittelt werden,
     wobei die Messelektroden (3, 4, 11, 12) so im Messrohr (1) angeordnet sind, dass bei einer Testmessung Quotienten aktueller Messwerte der ersten und zweiten Messgröße zumindest in einem Reynolds-Zahlenbereich von 10 000 ≤ *Re* ≤ 100 000 mit der Reynolds-Zahl des fließenden Mediums im Messrohr (1) bijektiv korrespondieren.

2. Durchflussmessgerät nach Anspruch 1,

   wobei die Messelektroden (3, 4, 11, 12) im Wesentlichen in einer Querschnittsebene liegen,
   wobei ein die zweite Messelektrode (4) schneidender erster Radius (13) und ein die dritte Messelektrode (11) schneidender zweiter Radius (14) einen Winkel $\alpha$ aufspannen mit $\alpha \geq 20°$, insbesondere $\alpha \geq 30°$ und bevorzugt

   $$40° \leq \alpha \leq 60°,$$

   wobei die Messschaltung (16) dazu eingerichtet ist Messwerte der ersten Messgröße zwischen der ersten und der zweiten Messelektrode (3, 4) zu ermitteln,
   wobei die Messschaltung (16) dazu eingerichtet ist Messwerte der zweiten Messgröße zwischen der ersten und der dritten Messelektrode (3, 11) oder an der dritten Messelektrode (11) in Bezug auf ein Referenzpotential zu ermitteln.

3. Durchflussmessgerät nach Anspruch 1,

   wobei eine eine erste und eine zweite Messelektrode (3, 4) schneidende erste Messelektrodenachse (17) und eine eine dritte und eine vierte Messelektrode (11, 12) schneidende zweite Messelektrodenachse (18) im Wesentlichen parallel verlaufen,
   wobei die Messschaltung (16) dazu eingerichtet ist Messwerte der ersten Messgröße zwischen der ersten und der zweiten Messelektrode (3, 4) zu ermitteln,
   wobei die Messschaltung (16) dazu eingerichtet ist Messwerte der zweiten Messgröße zwischen der dritten und der vierten Messelektrode (11, 12) zu ermitteln.

4. Durchflussmessgerät nach einem der vorherigen Ansprüche,

   wobei sich die erste Messgröße bei der Testmessung in einem Reynolds-Zahlenbereich von 10 000 ≤ *Re* ≤ 1 000 000 im Wesentlichen proportional zur Durchflussgeschwindigkeit des Mediums verhält,
   wobei die Änderung der zweiten Messgröße bei der Testmessung in einem Reynolds-Zahlenbereich von 10 000 ≤ *Re* ≤ 1 000 000 mit zunehmender Reynolds-Zahl nicht konstant ist.

**5.** Durchflussmessgerät nach einem der vorherigen Ansprüche,

wobei in der Testmessung das Medium ein newtonsches Fluid, insbesondere Wasser ist, wobei in der Testmessung das Durchflussmessgerät so in einer Rohrleitung mit einer geraden Einlaufstrecke von mindestens 20 DN und bevorzugt mindestens 50 DN eingebracht ist, dass in einem Messbereich ein im Wesentlichen symmetrisches Strömungsprofil vorliegt, wobei das Messrohr (1) einen Durchmesser von DN 80 aufweist.

**6.** Durchflussmessgerät nach einem der vorherigen Ansprüche, wobei die magnetfelderzeugende Vorrichtung (7) zwei insbesondere gegenüberliegend angebrachte Spulen (21) umfasst, die gleichsinnig in Serie geschaltet sind.

**7.** Verfahren zum Betreiben eines magnetisch-induktiven Durchflussmessgerätes nach einem der vorherigen Ansprüche, umfassend die Verfahrensschritte:

- Erfassen eines Messwertes einer ersten Messgröße und eines Messwertes einer zweiten Messgröße, wobei die jeweiligen Messwerte der beiden Messgrößen an unterschiedlichen Messelektrodenpaaren ermittelt werden; - Ermitteln einer von den Messwerten der ersten und der zweiten Messgröße abhängigen Reynolds-Zahl, wobei eine Abbildung, welche Reynolds-Zahlen Quotienten der ersten und der zweiten Messgröße zuordnet, zumindest in einem Reynolds-Zahlenbereich von 10 000 $\leq Re \leq$ 100 000 bijektiv ist.

**8.** Verfahren nach Anspruch 7, umfassend die Verfahrensschritte:

- Bilden einer korrigierten Durchflussgeschwindigkeit und/oder eines korrigierten Volumendurchflusses mittels eines Korrekturfaktors, wobei der Korrekturfaktor von der ermittelten Reynolds-Zahl abhängt.

**9.** Verfahren nach Anspruch 7 und/oder 8, umfassend die Verfahrensschritte:

- Ermitteln eines kinematischen Viskositätswertes, wobei der kinematische Viskositätswert mittels Messwerte der ersten oder der zweiten Messgröße und der ermittelten Reynolds-Zahl bestimmt wird.

**Claims**

**1.** Electromagnetic flowmeter comprising

- a measuring tube (1) for guiding a flowable medium, wherein the measuring tube (1) has a wall; - at least three measuring electrodes (3, 4, 11, 12), which are arranged in the wall, for forming a galvanic contact with the flowing medium in each case; - at least one magnetic field generating device (7) for generating a magnetic field passing through the measuring tube, and - a measuring circuit (16) which is set up to determine at least one first measured variable, wherein measured values of the first measured variable are determined at a first pair of measuring electrodes, - an evaluation circuit (19), which is set up to determine a Reynolds number and/or a kinematic viscosity value of the medium in the measuring tube (1) by means of measured values of the first and a second measured variable, which differs from the first measured variable,

wherein measured values of the second measured variable are determined at a second pair of measuring electrodes or at a third measuring electrode (11) in relation to a reference potential, wherein the measuring electrodes (3, 4, 11, 12) are arranged in the measuring tube (1) such that, during a test measurement, quotients of current measured values of the first and second measured variables correspond bijectively with the Reynolds number of the flowing medium in the measuring tube (1) at least in a Reynolds number range of 10 000$\leq$Re$\leq$100 000.

**2.** Flowmeter according to claim 1,

wherein the measuring electrodes (3, 4, 11, 12) lie substantially in a cross-sectional plane, wherein a first radius (13) intersecting the second measuring electrode (4) and a second radius (14) intersecting the third measuring electrode (11) span an angle $\alpha$ of a$\geq$20°, in particular $\alpha\geq$30° and preferably

$$40°\leq\alpha\leq60°,$$

wherein the measuring circuit (16) is set up to determine measured values of the first measured variable between the first and second measuring electrodes (3, 4)

wherein the measuring circuit (16) is set up to determine measured values of the second measured variable between the first and third measuring electrodes (3, 11) or at the third measuring electrode (11) in relation to a reference potential.

3. Flowmeter according to claim 1,

wherein a first measuring electrode axis (17) intersecting a first and a second measuring electrode (3, 4) and a second measuring electrode axis (18) intersecting a third and a fourth measuring electrode (11, 12) extend substantially parallel,

the measuring circuit (16) being set up to determine measured values of the first measured variable between the first and second measuring electrodes (3, 4),

wherein the measuring circuit (16) is set up to determine measured values of the second measured variable between the third and fourth measuring electrodes (11, 12).

4. Flowmeter according to one of the preceding claims,

wherein the first measured variable is substantially proportional to the flow rate of the medium during the test measurement in a Reynolds number range of 10 000≤Re≤1 000 000, whereby the change in the second measured variable during the test measurement in a Reynolds number range of 10 000≤Re≤1 000 000 is not constant with increasing Reynolds number.

5. Flowmeter according to one of the preceding claims,

wherein in the test measurement the medium is a Newtonian fluid, in particular water, wherein in the test measurement the flowmeter is installed in a pipe with a straight inlet section of at least 20 DN and preferably at least 50 DN in such a way that a substantially symmetrical flow profile is present in a measuring range, wherein the measuring tube (1) has a diameter of DN 80.

6. Flowmeter according to one of the preceding claims, wherein the magnetic field generating device (7) comprises two coils (21) which are mounted in particular opposite one another and which are connected in series in the same direction.

7. Method for operating an electromagnetic flowmeter according to one of the preceding claims, comprising the method steps:

- Detecting a measured value of a first measured variable and a measured value of a second measured variable,

wherein the respective measured values of the two measured variables are determined at different pairs of measuring electrodes;

- determining a Reynolds number dependent on the measured values of the first and second measured variables,

wherein a mapping which assigns Reynolds numbers to quotients of the first and the second measured variable is bijective at least in a Reynolds number range of 10 000≤Re≤100 000.

8. Method according to claim 7, comprising the method steps:

- Forming a corrected flow velocity and/or a corrected volumetric flow rate by means of a correction factor,

wherein the correction factor depends on the determined Reynolds number.

9. Method according to claim 7 and/or 8, comprising the method steps:

- Determining a kinematic viscosity value, wherein the kinematic viscosity value is determined by means of measured values of the first or the second measured variable and the determined Reynolds number.

## Revendications

1. Débitmètre électromagnétique, comprenant :

- un tube de mesure (1) pour le guidage d'un milieu fluide,

le tube de mesure (1) présentant une paroi ;

- au moins trois électrodes de mesure (3, 4, 11, 12) disposées dans la paroi pour former chacune un contact galvanique avec le milieu en écoulement ;

- au moins un dispositif de génération de champ magnétique (7) pour générer un champ magnétique traversant le tube de mesure, et

- un circuit de mesure (16) qui est conçu pour déterminer au moins une première grandeur de mesure,

des valeurs de mesure de la première grandeur de mesure étant déterminées sur une première paire d'électrodes de mesure,

- un circuit d'évaluation (19) qui est conçu pour déterminer un nombre de Reynolds et/ou une valeur de viscosité cinématique du fluide dans le tube de mesure (1) au moyen de valeurs de mesure de la première et d'une deuxième grandeur de mesure qui se distingue de la première grandeur de mesure,

des valeurs de mesure de la deuxième grandeur de mesure étant déterminées sur une deuxième paire d'électrodes de mesure ou sur une troisième électrode de mesure (11) par rapport à un potentiel de référence, les électrodes de mesure (3, 4, 11, 12) étant disposées dans le tube de mesure (1) de telle sorte que, lors d'une mesure test, des quotients de valeurs de mesure actuelles de la première et de la deuxième grandeur de mesure correspondent de manière bijective, au moins dans une plage de nombres de Reynolds de 10 000≤Re≤100 000, au nombre de Reynolds du fluide s'écoulant dans le tube de mesure (1).

2. Débitmètre selon la revendication 1,

dans lequel les électrodes de mesure (3, 4, 11, 12) se trouvent essentiellement dans un plan de section transversale,
dans lequel un premier rayon (13) coupant la deuxième électrode de mesure (4) et un deuxième rayon (14) coupant la troisième électrode de mesure (11) forment un angle $\alpha$ avec $\alpha \geq 20°$, notamment $a \geq 30°$ et de préférence

$$40° \leq \alpha \leq 60°,$$

le circuit de mesure (16) étant conçu pour déterminer des valeurs de mesure de la première grandeur de mesure entre la première et la deuxième électrode de mesure (3, 4),
le circuit de mesure (16) étant conçu pour déterminer des valeurs de mesure de la deuxième grandeur de mesure entre la première et la troisième électrode de mesure (3, 11) ou sur la troisième électrode de mesure (11) par rapport à un potentiel de référence.

3. Débitmètre selon la revendication 1,

dans lequel un premier axe d'électrode de mesure (17) coupant une première et une deuxième électrode de mesure (3, 4) et un deuxième axe d'électrode de mesure (18) coupant une troisième et une quatrième électrode de mesure (11, 12) sont sensiblement parallèles,
le circuit de mesure (16) étant conçu pour déterminer des valeurs de mesure de la première grandeur de mesure entre la première et la deuxième électrode de mesure (3, 4),
le circuit de mesure (16) étant conçu pour déterminer des valeurs de mesure de la deuxième grandeur de mesure entre la troisième et la quatrième électrode de mesure (11, 12).

4. Débitmètre selon l'une des revendications précédentes,

dans lequel la première grandeur de mesure se comporte, lors de la mesure de test, dans une plage de nombre de Reynolds de 10 000≤Re≤1 000 000, de manière essentiellement proportionnelle à la vitesse d'écoulement du fluide,
la variation de la deuxième grandeur mesurée lors de la mesure d'essai dans une plage de nombres de Reynolds de 10 000≤Re≤1 000 000 n'étant pas constante lorsque le nombre de Reynolds augmente.

5. Débitmètre selon l'une des revendications précédentes,

dans lequel, lors de la mesure test, le fluide est un fluide newtonien, notamment de l'eau,
dans lequel, lors de la mesure test, le débitmètre est placé dans une conduite avec un tronçon d'entrée rectiligne d'au moins 20 DN et de préférence d'au moins 50 DN, de telle sorte qu'il existe un profil d'écoulement sensiblement symétrique dans une zone de mesure,
le tube de mesure (1) présentant un diamètre de DN 80.

6. Débitmètre selon l'une des revendications précédentes,
dans lequel le dispositif de génération de champ magnétique (7) comprend deux bobines (21) montées en particulier en face l'une de l'autre, qui sont connectées en série dans le même sens.

7. Procédé de fonctionnement d'un débitmètre électromagnétique selon l'une des revendications précédentes, comprenant les étapes de procédé suivantes :

- Saisie d'une valeur de mesure d'une première grandeur de mesure et d'une valeur de mesure d'une deuxième grandeur de mesure,
les valeurs de mesure respectives des deux grandeurs de mesure étant déterminées sur différentes paires d'électrodes de mesure ;
- Détermination d'un nombre de Reynolds dépendant des valeurs de mesure de la première et de la deuxième grandeur de mesure,
une cartographie qui associe des nombres de Reynolds à des quotients de la première et de la deuxième grandeur de mesure étant bijective au moins dans une plage de nombres de Reynolds de 10 000≤Re≤100 000.

8.  Procédé selon la revendication 7, comprenant les étapes de procédé suivantes :

    - Formation d'une vitesse d'écoulement corrigée et/ou d'un débit volumique corrigé au moyen d'un facteur de correction,
    le facteur de correction dépendant du nombre de Reynolds déterminé.

9.  Procédé selon la revendication 7 et/ou 8, comprenant les étapes de procédé :

    - Détermination d'une valeur de viscosité cinématique,
    la valeur de viscosité cinématique étant déterminée au moyen de valeurs de mesure de la première ou de la deuxième grandeur de mesure et du nombre de Reynolds déterminé.

Fig. 1(Stand der Technik)

Fig. 2

Fig. 3

Fig. 4

Menü von $U_1$

Menü von $U_2$

Quotientenbildung $U_1/U_2$

Abgleich des Quotienten
mit im Speicher hinterlegten
Referenzwertes

Ermitteln der dem Quotienten
zugeordenten Reynolds-Zahl

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0770855 A1

**In der Beschreibung aufgeführte Nicht-Patentliteratur**

- TOMOGRAPHISCHE METHODEN BEI DER INDUKTIVEN DURCHFLUSSMESSUNG ZUR BESTIMMUNG VON STROEMUNGSPROFILEN UND -PARAMETERN. **A. TRÄCHTLER.** Technisches Messen/Plattform für Methoden, Systeme und Anwendungen der Messtechnik. R. OLDENBOURG VERLAG, 01. Oktober 1997